(19) Europäisches Patentamt / European Patent Office / Office européen des brevets

(11) **EP 3 959 176 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **20720779.6**

(22) Anmeldetag: **16.04.2020**

(51) Internationale Patentklassifikation (IPC):
**C02F 1/52** *(2023.01)*     **C02F 1/56** *(2023.01)*
**C02F 1/38** *(2023.01)*

(52) Gemeinsame Patentklassifikation (CPC):
**C02F 1/5209; C02F 1/56; C02F 11/147;** C02F 1/38;
C02F 2209/006; C02F 2209/008; C02F 2209/04;
C02F 2209/05

(86) Internationale Anmeldenummer:
**PCT/EP2020/060713**

(87) Internationale Veröffentlichungsnummer:
**WO 2020/216670 (29.10.2020 Gazette 2020/44)**

(54) **VERFAHREN ZUR FLOCKUNG VON IN EINER SUSPENSION ENTHALTENEN FESTSTOFFPARTIKELN, SOWIE SYSTEM ZUR AUSFÜHRUNG DES VERFAHRENS**

METHOD FOR FLOCCULATING SOLID PARTICLES CONTAINED IN A SUSPENSION, AND SYSTEM FOR CARRYING OUT THE METHOD

PROCÉDÉ DE FLOCULATION DE PARTICULES SOLIDES CONTENUES DANS UNE SUSPENSION, ET SYSTÈME DE RÉALISATION DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2019   DE 102019110830**

(43) Veröffentlichungstag der Anmeldung:
**02.03.2022   Patentblatt 2022/09**

(73) Patentinhaber: **Kam Analysen- und Messtechnik GmbH**
**91352 Hallerndorf (DE)**

(72) Erfinder:
• **KOCHER, Michael**
**91349 Egloffstein (DE)**

• **VALI, Mohammad Reza**
**50354 Hürth (DE)**
• **KRÜGER, Werner**
**50169 Kerpen (DE)**
• **ALBERS, Matthias**
**40721 Hilden (DE)**

(74) Vertreter: **Patentanwälte Bauer Vorberg Kayser Partnerschaft mbB**
**Goltsteinstraße 87**
**50968 Köln (DE)**

(56) Entgegenhaltungen:
WO-A1-2018/132306     DE-A1- 1 642 799
JP-A- 2018 149 495     US-A- 3 594 313
US-B1- 6 387 274

**Beschreibung**

Die vorliegende Erfindung betrifft ein Verfahren zur Flockung von in einer Suspension enthaltenen Feststoffpartikeln. Ebenso betrifft die vorliegende Erfindung ein System zur Ausführung des genannten Verfahrens. Das vorliegend beschriebene Verfahren bzw. System bezieht sich dabei insbesondere auf in der der Abwasserbehandlung, der chemischen Produktion und der Trinkwasseraufbereitung anfallenden Suspensionen. Besonders bevorzugt wird die vorliegende Erfindung jedoch im Bereich der Klärschlammentwässerung und Eindickung der dort anfallenden Suspensionen eingesetzt, also in wässrigen Systemen.

Für die in den genannten Bereichen notwendige Trennung von fest-flüssig Stoffgemischen ist die Bildung von Flocken oder die Aggregation bzw. Koagulation der Feststoffpartikel Grundvoraussetzung. Insbesondere bei der Schlammentwässerung ist die Bildung einer gut zu entwässernden Schlammflocke von entscheidender Bedeutung. So müssen Abwasserschlämme in Klärwerken zum Beispiel erst geflockt werden, bevor sie entwässert werden können. Die Schlammentwässerung ist dabei dem eigentlichen Klärprozess nachgelagert. Der Abwasserschlamm ist das "Abfallprodukt" des Klärprozesses. Je nach Auslegung des Klärverfahrens bzw. der Kläranlage kann aber auch vor der Entwässerung bereits eine Flockung durchgeführt werden, beispielsweise vor der Schlammfaulung.

Durch die Zugabe geeigneter Flockungsmittel, können Flockungsvorgänge initiiert und/oder beschleunigt werden. Entsprechend lässt sich die Koagulation und/oder Flockulation der in einer Suspension enthaltenen Feststoffpartikel verbessern. Ebenso werden dadurch die in einem fest-flüssig Trennverfahren ablaufenden Prozessschritte der Sedimentation, Flotation oder Filtration verbessert. In verfahrenstechnischer Hinsicht kann die Flockung sowohl kontinuierlich als auch diskontinuierlich erfolgen. Bei einer kontinuierlichen Verfahrensführung findet die Flockung bei einem kontinuierlichen Volumenstrom statt.

Wie bereits angedeutet spielen Flockungsverfahren eine bedeutende Rolle bei der Trennung von fest-flüssig Systemen wie Suspensionen. Unter einer Suspension ist ein heterogenes Stoffgemisch aus einer Flüssigkeit und in der Flüssigkeit verteilten Feststoffpartikeln zu verstehen. Auch kann eine Suspension als disperse feste Phase in einer kontinuierlichen flüssigen Phase beschrieben werden. Charakteristisch für eine Suspension ist, dass sich die Feststoffpartikel beim Ruhen des Systems nach einer gewissen Zeit (im Gegensatz zu einer "echten" chemischen Lösung) auf dem Boden in Form eines Sediments absetzen. Die über dem Bodensatz befindliche Flüssigkeit lässt sich mit einfachen Mitteln vom Feststoff abtrennen, beispielsweise durch Dekantieren.

Ausdrücklich sei bereits an dieser Stelle betont, dass sich die Erfindung grundsätzlich nicht auf eine bestimmte Größenordnung von in einer Flüssigkeit verteilten Feststoffpartikeln beschränkt. So lässt sich die Erfindung grundsätzlich auch bei kolloidalen Lösungen unter Ausflockung der dort enthaltenen kolloidalen Partikel einsetzen. Ebenso kann die Erfindung auch im Rahmen von Fällungsverfahren zum Einsatz kommen, bei denen in einer Flüssigkeit gelöste Partikel unter Zugabe eines Fällungsmittels ausgefällt und in eine feste Phase überführt werden. Sofern im Rahmen der Erfindung von einer "Ausflockung", "Flockulation" oder einem "Flockungsmittel" die Rede ist, so kann darunter auch eine Fällung mit einem Fällungsmittel zu verstehen sein. Weiterhin sei betont, dass der Begriff der "Flockung" bzw. "Flockulation" synonym zum Begriff der Aggregation bzw. der Koagulation zu verstehen ist. All diese Prozesse sind von der Erfindung umfasst. Zu erwähnen ist ferner, dass der im Rahmen der hiesigen Erfindungsbeschreibung verwendete Begriff des "Flockungsmittels" jegliche Art von Flockungsmittel umfassen kann, sei es ein Flockungsmittel von anorganischer, organischer oder polymerer Natur. Unter anderem fallen unter den Begriff des "Flockungsmittels" auch die sogenannten polymeren Flockungsmittel (kurz pFM).

Die in einer (wässrigen) Suspension enthaltenen Feststoffpartikel weisen in der Regel eine bestimmte Oberflächenladung auf, welche durch Ausbildung einer sogenannten Helmholtz-Doppelschicht eine Flockulation durch elektrostatische Abstoßung verhindert. Derartige Suspensionen werden auch als "stabile" Suspensionen bezeichnet. Durch die Zugabe von Hilfsstoffen (nachfolgend als Flockungsmittel bezeichnet, umfasst sind damit sowohl Koagulanten als auch Flockulanten) wird ein Ladungsausgleich der Feststoffoberfläche herbeigeführt, wodurch die Suspension destabilisiert und eine Flockulation ermöglicht wird. Die zugegebenen Flockungsmittel weisen dazu in der Regel eine bestimmte Ladung auf. Am sogenannten isolektrischen Punkt (vollständiger Ladungsausgleich) heben sich anionische und kationische Ladungen gegenseitig auf und die Feststoffe können koagulieren bzw. flockulieren. Hierdurch erfolgt die Trennung der festen von der flüssigen Phase.

Im Bereich der Klärschlammentwässerung erfolgt die fest-flüssig Trennung häufig im Wege eines kontinuierlichen Entwässerungsverfahrens, beispielsweise unter Einsatz von Dekanterzentrifugen oder Schneckenpressen. Dabei sind jedoch keinerlei Verfahren bekannt, die eine bedarfsgerechte Zugabe eines Flockungsmittels bis zum Erreichen des isoelektrischen Punkts in einem kontinuierlichen Entwässerungsverfahren bestimmen. Ohne eine solche bedarfsgerechte Einstellung des Flockungsmittels kann es bei schwankenden Zulaufqualitäten der zu entwässernden Suspensionen (also beispielsweise unterschiedlichen Feststoffanteilen oder Feststoffzusammensetzungen) zu Fehldosierungen des Flockungsmittels kommen. Damit einher geht eine verminderte Effizienz bei der fest-flüssig Trennung. Mit einer ebenfalls ungewollten Überdosierung von Flockungsmittel geht ein unnötiger Materialverbrauch und ein erhöhter Kostenaufwand einher.

Bekannt ist, dass die Dosierung von Flockungsmitteln proportional zur berechneten Feststofffracht der Suspension erfolgt, jedoch auch durch Überwachung der abgeschiedenen Flüssigphase mittels einer Strömungspotential-Messung oder durch Überwachung der abgeschiedenen Flüssigphase mittels optischer Verfahren.

Neben den genannten rechnerischen und instrumentellen Techniken sind jedoch auch Methoden bekannt, die auf der Erfahrung des Betriebspersonals einer Entwässerungsanlage basieren, beispielsweise im Wege einer visuellen Inspektion (Sichtkontrolle, Erfühlen einer Textur, etc.).

Problematisch an den bisher bekannten Verfahren ist, dass eine quantitative Beurteilung des Überschusses/-Defizits an zugesetztem Flockungsmittel nicht möglich ist. Der Einsatz einer Strömungspotential-Messung konnte in der Vergangenheit keine verwertbaren Ergebnisse liefern, da das Strömungspotential, neben der Ladung der Suspension, zusätzlich von der Leitfähigkeit, Viskosität und dem Feststoffanteil der Suspension abhängt. Bei beispielsweise wechselnden Salzkonzentrationen konnte damit bisher kein Zusammenhang zwischen dem Feststoffanteil und einem Defizit/-Überschuss an Flockungsmittel hergestellt werden.

Bei der ebenfalls bekannten frachtproportionalen Dosierung von Flockungsmitteln kann die möglicherweise unterschiedliche Zusammensetzung der Suspension problematisch sein, da der Gehalt an Feststoffpartikeln keine Aussage über dessen Oberflächenladung und sonstige Wechselwirkungen mit der Suspension erlaubt. Weiterhin ist bekannt, farblich markierte Flockungsmittel einzusetzen, die im Wege einer Färbung einen Überschuss an Flockungsmittel anzeigen können. Ebenfalls bekannt ist ein Verfahren unter Nutzung einer indirekten Rücktitration mit Farbumschlag zur Endpunktanzeige. Problematisch bei der Behandlung von Suspensionen mit Flockungsmitteln ist jedoch, dass die Bestimmung des Ladungsausgleichs durch mechanische Belastung (z.B. Zentrifugation, Abpressen) beeinflusst wird, was in der Praxis oft zu unnötigen Überdosierungen der Hilfsstoffe führt. Einige, relevante Dokumente sind DE 16 42 799 A1, US 3 594 313 A, US 6 387 274 B1, WO 2018/132306 A1, JP 2018 149495 A.

Entsprechend liegt der vorliegenden Erfindung die Aufgabe zugrunde ein Verfahren zur Flockung von in einer Suspension enthaltenen Feststoffpartikeln sowie ein System zur Ausführung eines Verfahrens bereitzustellen, mit welchen der tatsächliche Bedarf an für eine effiziente Flockung benötigtem Flockungsmittel in einem kontinuierlichen Flockungsverfahren einer Suspension bereitgestellt werden kann.

Zur Lösung dieser Aufgabe wird ein Verfahren mit den Merkmalen des Patentanspruchs 1 sowie ein System mit den Merkmalen des Patentanspruchs 14 vorgeschlagen.

Wie bereits erwähnt betrifft die vorliegende Erfindung ein Verfahren zur Flockung von in einer Suspension enthaltenen Feststoffpartikeln. Das genannte Verfahren umfasst zumindest die nachfolgend erläuterten Verfahrensschritte.

So betrifft ein erster Verfahrensschritt a. das Bereitstellen einer Suspension und das Angeben einer Zielladungsdichte der Suspension, mit der Maßgabe, dass die Zielladungsdichte jene Ladungsdichte der Suspension ist, bei welcher die Feststoffpartikel flocken. Unter Bereitstellung einer Suspension ist in diesem Zusammenhang die Festlegung auf eine bestimmte Suspension zu verstehen, die im Wege des erfindungsgemäßen Verfahrens einer Flockung unterzogen werden soll (beispielsweise als Teilschritt eines Entwässerungsverfahrens), also letztlich die Auswahl eines bestimmten Untersuchungssystems. Dabei handelt es sich vornehmlich um eine in ein Entwässerungsaggregat kontinuierlich oder batchweise eingeführte Suspension, welche in dem Entwässerungsaggregat einer ein- oder mehrstufigen Entwässerung unterzogen wird. Insbesondere bezieht sich das erfindungsgemäße Verfahren auf jenen Verfahrensschritt des Entwässerungsverfahrens, in welchem eine Flockung der in der Suspension enthaltenen Feststoffpartikel erfolgt.

Die genannte Zielladungsdichte betrifft einen Zielwert für die in der Suspension zu erzielende Ladungsdichte. Sie bezieht sich auf jede Ladungsdichte der Suspension, bei welcher eine möglichst vollständige und effiziente Flockung der Feststoffpartikel in der Suspension gewährleistet werden kann. Die Zielladungsdichte ist abhängig von der Art und der Zusammensetzung der konkret vorliegenden Suspension. Sie gibt somit die für die Flockung einer bestimmten Suspension ideale Ladungsdichte wieder. Grundsätzlich nimmt die Zielladungsdichte einen idealisierten Wert von 0 $\mu$eq/L ein. Bei Abweichungen muss die Zielladungsdichte im Großversuch empirisch am entsprechenden Entwässerungsaggregat durchgeführt werden. Auch eine Bestimmung in einer gesonderten Laboruntersuchung kann in Betracht kommen. Im Wege der Laboruntersuchung wird - beispielsweise im Wege einer Titration - die für einen optimalen Flockungsvorgang benötigte Menge an Flockungsmittel bestimmt. Die optimale Menge des Flockungsmittels kann auch in Form einer Ziel-Konzentration oder Ziel-Stoffmenge angegeben werden. Die Zielladungsdichte der Suspension kann also eine jede Ladungsdichte angeben, die bei Erreichen des isoelektrischen Punkts oder nahe dem Erreichen des isoelektrischen Punkts vorliegt. Die Zielladungsdichte kann also ohne Weiteres auch von der am isoelektrischen Punkt vorliegenden Ladungsdichte abweichen. Die Zielladungsdichte kann im Wege von Laboruntersuchungen ermittelt werden, allerdings kann die Zielladungsdichte auch frei festgelegt werden.

In einem weiteren Verfahrensschritt b. wird ein Flockungsmittel bereitgestellt, wobei das Flockungsmittel eine Flockungsmittel-Ladungsdichte aufweist. Unter der Bereitstellung eines Flockungsmittels kann die Synthese, Bestellung, Lieferung, im Grund also die Verwendung eines bestimmten Flockungsmittels verstanden werden. Die Art des Flockungsmittels wird unter Berücksichtigung der bereitgestellten Suspension ausgewählt, insbesondere kommen aber geladene Polymere als Flockungsmittel in Betracht (beispielsweise geladene pFMs). Die Flockungsmittel-Ladungsdichte kann von einem Hersteller des Flockungsmittels angegeben werden oder im Rahmen des erfindungsgemäßen Verfahrens gesondert bestimmt werden. Dabei kann die Flockungsmittel-Ladungsdichte insbesondere im Wege einer gesonderten Laboruntersuchung ermittelt werden. Damit ist insbesondere die Bestimmung der Flockungsmittel-Ladungsdichte im Wege einer kolloidalen Titration auf Basis des Strömungspotentials gemeint. Insbesondere wird dazu ein anionischer oder kationischer Titrant bekannter Molarität eingesetzt.

In einem weiteren Verfahrensschritt c. wird zu einer Vielzahl von Messzeitpunkten die in der Suspension (aktuell) vorliegende Suspensions-Ladungsdichte ermittelt, nämlich im Wege einer titrimetrischen Analyse unter Messung des Strömungspotentials. Dabei kommen sowohl kationische als auch anionische Titranten in Betracht. Als Beispiel für mögliche kationische Titranten seien Polyamine bzw. Polyaminsalze und Poly-DADMAC (Polydiallyldimethylammoniumchlorid) zu nennen. Als Beispiel für mögliche anionische Titranten seien PEs-Na (Polyethylen saures Natriumsulfonat) und KPVS (Kaliumpolyvinylsulfat) zu nennen. Die Messung wird dabei in einer Messzelle durchgeführt, die Bestandteil einer eigens dazu vorgesehenen Messeinrichtung sein kann. Die Messeinrichtung kann in unmittelbarer Nähe eines die Suspension enthaltenden Entwässerungsaggregats angeordnet werden oder stationär in das Entwässerungsaggregat integriert sein. Auch kann die Messeinrichtung als mobile Messeinrichtung ausgebildet sein. In allen Fällen muss jedoch gewährleistet sein, dass der Messeinrichtung bzw. der Messzelle über einen geeigneten Zulauf Proben der Suspension zugeführt werden können. Die Zuführung kann beispielsweise über eine Pumpe oder eine entsprechende Ansaugvorrichtung gewährleistet werden. Wie bereits erwähnt kann die titrimetrische Analyse zu einer Vielzahl von Messzeitpunkten durchgeführt werden. Dies ist ein entscheidender Aspekt der vorliegenden Erfindung. Denn erst eine Verlaufskontrolle der Suspensions-Ladungsdichte über einen bestimmten Zeitraum des Entwässerungsprozesses erlaubt eine bedarfsgerechte Zugabe bzw. Anpassung des Flockungsmittels. Der Zeitraum kann sich auch über den gesamten Zeitraum des Entwässerungsvorgangs erstrecken. In kontinuierlichen Entwässerungsverfahren, d.h. in Verfahren bei denen einem Entwässerungsaggregat kontinuierlich eine zu entwässernde Suspension zugeführt wird, muss die Vielzahl der Messzeitpunkte nicht auf einen bestimmten Zeitraum festgelegt werden, vielmehr können die Messungen auch andauernd (in einem gewissen zeitlichen Abstand) durchgeführt werden. Der zeitliche Abstand der Messzeitpunkte ist durch die Messdauer der einzelnen Messungen limitiert. Die maximal erzielbare zeitliche Auflösung orientiert sich also an der Dauer des Verfahrensschritts c. bezogen auf einen einzelnen Messzeitpunkt.

Die im Rahmen des Verfahrensschritt c. durchgeführte Analyse bzw. Messung beruht auf einer Ladungstitration unter Messung des Strömungspotentials mit einem "streaming-current detector". Dabei lagert sich überschüssiges Flockungsmittel (beispielsweise ein geladenes Polymer) an einer Wandung der Messzelle an. Die Oberflächenladung des Flockungsmittels wird durch Gegenionen aus der umgebenden Lösung kompensiert. Die Gegenionen lagern sich zunächst in einer stabilen inneren Schicht (sog. Stern-Schicht) sowie einer verschiebbaren äußeren Schicht an. Den Übergang zwischen den Schichten bezeichnet man als Scherebene ("slipping plane"). Zur Messung des Strömungspotentials wird in der Messzelle ein Teflon-Stößel in eine schnell ausgeführte, reversible Bewegung entlang seiner Längsachse versetzt. Aufgrund des geringen Abstands zu den Wänden der Messzelle kommt es durch die resultierende Strömung zu einer Abscherung der verschiebbaren Ionenschicht, wodurch sich ein messbares elektrisches Potential entlang der Wandung der Messzelle aufbaut. Zur Ausbildung des elektrischen Potentials müssen sich Partikel mit einer Oberflächenladung an die Wandung der Messzelle anlagern. Unter der Annahme, dass nur das im Rahmen des Flockungsverfahrens eingesetzte (polymere) Flockungsmittel in der Lage ist sich an der Wandung anzulagern, so steht das gemessene elektrische Potential in unmittelbarem Zusammenhang mit einem Überschuss an freiem Flockungsmittel (z.B. Polymer). Mit freiem Flockungsmittel sind dabei jene Flockungsmittelmoleküle oder Flockungsmittelpartikel gemeint, deren Oberflächenladung nicht durch entsprechende Gegenionen (z.B. Oberflächenladungen der Feststoffpartikel in der Suspension) kompensiert wurde. Für den Fall, dass kein Überschuss an Flockungsmittel vorhanden ist, werden die Wandungen der Messzelle mit anderen Polyelektrolyten oder ähnlich reagierenden Substanzen (z.B. geladene Partikel aus der Suspension) belegt. Die Messung läuft dann analog zum oben beschriebenen Ablauf ab, jedoch mit anderem Vorzeichen der Ladungsdichte. Das Messgerät ist somit in der Lage sowohl einen Überschuss als auch einen Unterschuss an Flockungsmittel zu erkennen und dessen Dosierung entsprechend anzupassen.

Mit geeigneten Titranten (dies können ebenfalls geladene Polymere sein) wird der Überschuss an Flockungsmittel durch Bildung von stabilen Ionenpaaren titriert. Das in Ionenpaaren gebundene Flockungsmittel lagert sich nicht mehr an die Wandung an und kann somit auch keine abscherbaren Ionenschichten anlagern. Das messbare elektrische Potential sinkt somit im Laufe der Titration bis das Flockungsmittel nicht mehr zu diesem beiträgt. Die Ladung des Flockungsmittels ist an diesem Punkt vollständig durch den Titranten kompensiert. Bei einer Titration über diesen Punkt hinaus, wird das messbare Potential durch den Titranten selbst bestimmt. Der Punkt der elektrischen Neutralisation des Flockungsmittels (isoelektrischer Punkt) kann somit exakt bestimmt werden. Prinzipiell ist auf diesem Wege auch eine Bestimmung der freien Oberflächenladung der Feststoffpartikel der Suspension möglich. Dieser Fall tritt z.B. ein, wenn zu wenig Flockungsmittel zur Ladungskompensation in die Suspension zugegeben wurde. Die Messeinrichtung bzw. Messzelle erkennt die konkret vorliegende Situation anhand des Vorzeichens der Ladungsdichte und kann automatisch einen geeigneten Titranten auswählen. Die an den jeweiligen Zeitpunkten durchgeführte Titration wird vorzugsweise automatisiert ausgeführt.

In einem weiteren erfindungsgemäßen Verfahrensschritt d. wird eine zu den jeweiligen Messzeitpunkten zur Gewährleistung einer optimalen Flockung benötigte Zugabemenge des Flockungsmittels ermittelt, dabei basierend auf der Zielladungsdichte der Suspension, der Flockungsmittel-Ladungsdichte und der zu dem jeweiligen Messzeitpunkt vorliegenden Suspensionsladungsdichte. Zur Ermittlung der benötigten Zugabemenge wird zunächst die Differenz aus der Zielladungsdichte der Suspension und der gemessenen Suspensionsladungsdichte berechnet. Der Quotient aus der so ermittelten Differenz und der Flockungsmittel-Ladungsdichte erlaubt die Berechnung der Zugabemenge. Dabei kann die benötigte Zugabemenge beispielsweise in Form des benötigten Volumens an Flockungsmittel pro Volumen der Suspension angegeben werden. Bei bekannten Zulaufdaten der Suspension in das Messaggregat kann die Zugabemenge auch auf weitere Bezugsgrößen umgerechnet werden, beispielsweise auf das Volumen an benötigtem Flockungsmittel pro Masseneinheit der Suspension oder auf das Volumen an benötigtem Flockungsmittel pro Zeiteinheit.

Da die benötigte Zugabemenge des Flockungsmittels zu einer Vielzahl von Messzeitpunkten bestimmt wird, kann erfindungsgemäß vorgesehen sein, dass bei der Berechnung der Zugabemenge zu einem bestimmten Messzeitpunkt, die Zugabemenge eines dem aktuellen Messzeitpunkt vorangehenden Messzeitpunktes einbezogen wird, beispielsweise im Wege einer Wertaddition. Je nach Regelalgorithmus (konkrete Beispiele sind an späterer Stelle beschrieben), kann auch vorgesehen sein die Zugabemenge im Wege einer frachtproportionalen Dosierung auf einen konkret vorliegenden Feststoffgehalt der Suspension zu beziehen. Auch kann vorgesehen sein, die ermittelte Zugabemenge mit einem bestimmten Multiplikationsfaktor zu multiplizieren. Der Multiplikationsfaktor kann dabei beispielsweise empirisch oder rechnerisch bestimmt werden.

In einem weiteren Verfahrensschritt e. wird im Anschluss an die jeweiligen Messzeitpunkte der Suspension die ermittelte Zugabemenge des Flockungsmittels hinzugegeben. Ist die ermittelte Zugabemenge an Flockungsmittel Null, so wird der Suspension zumindest für einen bestimmten Zeitraum (beispielsweise bis zum nächsten Messzeitpunkt) kein weiteres Flockungsmittel hinzugefügt. Durch die bedarfsangepasste Zugabe des Flockungsmittels werden sich im Laufe des Flockungsprozesses bzw. des Entwässerungsvorgangs ergebende Veränderungen der Verfahrensbedingungen oder der Zusammensetzung der Suspension (im kontinuierlichen Verfahren beispielsweise aufgrund eines variablen Zustroms) berücksichtigt. Folglich wird zu den jeweiligen auf die Messzeitpunkte folgenden Zugabezeitpunkten nur die tatsächlich für einen optimalen Flockungsvorgang benötigte Menge an Flockungsmittel zugegeben. Einerseits wird dadurch die Effizienz des Flockungsvorgangs optimiert, andererseits wird ein unnötiger Chemikalienverbrauch vermieden.

Die Unteransprüche betreffen vorteilhafte Ausgestaltungen und Weiterbildungen der vorliegenden Erfindung. Die in den Unteransprüchen genannten Merkmale können in beliebiger Kombination zur Weiterbildung des erfindungsgemäßen Verfahrens sowie des erfindungsgemäßen Systems verwendet werden, soweit dies technisch möglich ist. Dies gilt auch dann, wenn derartige Kombinationen nicht ausdrücklich durch entsprechende Rückbezüge in den Ansprüchen verdeutlicht sind. Insbesondere gilt dies auch über die Kategorie-Grenzen der Patentansprüche hinweg.

Nach einer vorteilhaften Ausgestaltung des erfindungsgemäßen Verfahrens kann die Zielladungsdichte im Wege einer gesonderten Laboruntersuchung ermittelt werden, beispielsweise im Wege einer Titration. Dazu kann manuell oder automatisiert eine Probe aus der dem Flockungsverfahren bzw. der Entwässerung zu unterziehenden Suspension entnommen und die Zielladungsdichte titrimetrisch bestimmt werden. Wie bereits vorangehend beschrieben gibt die Zielladungsdichte die ideale Ladungsdichte für die Flockung einer bestimmten (bzw. der dem Flockungsvorgang zu unterziehenden) Suspension an. Im Wege der Laboruntersuchung wird - beispielsweise im Wege einer Titration - die für einen optimalen Flockungsvorgang benötigte Menge an Flockungsmittel bestimmt. Die Zielladungsdichte der Suspension kann also eine jede Ladungsdichte angeben, die bei Erreichen des isoelektrischen Punkts vorliegt. Bezogen auf eine mögliche Anwendung des erfindungsgemäßen Verfahrens bei der Schlammentwässerung wird die Zielladungsdichte anhand der konkret vorliegenden Bedingungen des zu entwässernden Schlamms bestimmt. Dazu wird die optimale Menge an zur Flockung benötigtem Flockungsmittel (insbesondere geladenem Polymer) bestimmt. Der gemessene (und benötigte) Flockungsmittelüberschuss wird als Zielladungsdichte festgelegt. Ist kein Überschuss notwendig, so wird der Wert der Zielladungsdichte im Idealfall auf Null festgelegt. Es ist festzuhalten, dass die Zielladungsdichte in Abhängigkeit von den Erfordernissen im Flockungsprozess grundsätzlich auf einen beliebigen Wert mit positivem oder negativem Vorzeichen, einschließlich Null, festgelegt werden kann. Im Rahmen des erfindungsgemäßen Verfahrens kann vorgesehen sein, die Bestimmung der Zielladungsdichte in bestimmten (vorgebbaren) Zeitintervallen zu wiederholen, was insbesondere bei Verwendung des erfindungsgemäßen Verfahrens in einem kontinuierlichen Entwässerungsverfahren von Vorteil sein kann. Jedoch kann gleichsam vorgesehen sein, dass die Zielladungsdichte für eine bestimmte Suspension nur einmalig oder regelmäßig ermittelt wird, vorzugsweise vor dem Beginn des Entwässerungsverfahrens bzw. vor der Zugabe des Flockungsmittels. Eine einmalige Bestimmung der Zielladungsdichte der Suspension vor dem Beginn des Flockungsverfahrens eignet sich insbesondere zur Ausführung der Erfindung im Rahmen eines diskontinuierlichen Entwässerungsverfahrens, d.h. eine vorgegebene Menge bzw. ein vorgegebenes Volumen (also ein batch) einer zu entwässernden Suspension wird nach und nach (z.B. unter kontinuierlicher Zugabe von Flockungsmittel) entwässert. In diesem Falle wird also nur einmalig eine bestimmte Menge einer zu entwässernden bzw. dem Flockungsverfahren auszusetzenden Suspension in ein Entwässerungsaggregat eingeleitet. Eine kontinuierliche Zuleitung findet indes nicht statt.

Wie ebenfalls schon vorangehend erwähnt, kann es vorteilhaft sein, dass die Flockungsmittel-Ladungsdichte festgelegt, aus empirischen Daten abgeleitet oder im Wege einer gesonderten Untersuchung ermittelt wird, beispielsweise im Wege einer Titration, die automatisch in der Messeinrichtung oder im Labor durchgeführt wird. Dabei kann entweder vorgesehen sein, dass die Flockungsmittel-Ladungsdichte seitens eines Flockungsmittel Herstellers einer Laboruntersuchung unterzogen wird, jedoch kann dies ohne Weiteres auch seitens des Anwenders erfolgen. Auch die Ladungsdichte des Flockungsmittels kann im Wege einer auf dem Strömungspotential basierenden Titration festgestellt werden. Im Falle der Verwendung eines geladenen Polymers als Flockungsmittel ist die vorgenommene Titration fachüblich als kolloidale Titration unter Verwendung des Strömungspotentials zu bezeichnen.

In der Regel wird das Flockungsmittel (z.B. ein geladenes Polymer oder pFM) in einer wässrigen Ansatzlösung bereitgestellt. Problematisch hierbei ist, dass eine solche wässrige Flockungsmittel-Lösung einer auf Hydrolyse basierenden Alterung unterliegt. Im Zuge der Alterung nimmt die Ladungsdichte der Ansatzlösung (bzw. des darin enthaltenen Flockungsmittels wie einem Polymer) kontinuierlich ab. Wie bereits erwähnt, kann das erfindungsgemäße Verfahren dahingehend ausgeführt werden, dass bei der Ermittlung der zu einem bestimmten Zeitpunkt benötigten Zugabemenge an Flockungsmittel, die Zugabemenge eines dem jeweiligen Zeitpunkt vorangehenden Zeitpunkts berücksichtigt wird. Bei einer solchen Dosierung des Flockungsmittels in Abhängigkeit von einer vorangehend zugegebenen Menge an Flockungsmittel wird gewährleistet, dass sich die Alterung der Ansatzlösung nur auf die Differenz zur Zielladungsdichte auswirkt. Die Basisladungsmenge bleibt unverändert, solange kontinuierlich Flockungsmittel in die Suspension gegeben wird. Solange die Qualität (also die chemische Zusammensetzung) der Suspension weitgehend konstant bleibt, können somit die Auswirkungen der Polymeralterung in den zu betrachtenden Zeiträumen kompensiert werden.

Darüber hinaus sind weitere Strategien denkbar, um die Alterungseffekte im Flockungsmittel auszugleichen. Zunächst kann zu jedem Zugabezeitpunkt (der Zugabezeitpunkt folgt den jeweiligen Messzeitpunkten) ein Erwartungswert für die Ladungsdichte definiert werden, der bei der nachfolgenden Messung mit der gemessenen Ladungsdichte verglichen wird. Aus dem Quotienten von Erwartungswert und Messwert kann ein Alterungsfaktor berechnet werden, mit welchem der ermittelte Dosierwert bzw. die Zugabemenge multipliziert wird. Der Alterungsfaktor hat die Funktion eines Korrekturfaktors. Bei einer derartigen Strategie ist jedoch nachteilig, dass jene Veränderungen der Flockungsmittel-Ladungsdichte, die nicht auf die Alterung des Flockungsmittels an sich zurückgehen (z.B. Veränderungen aus Basis einer veränderten Suspensionszusammensetzung) bei einer solchen Wertekorrektur nicht berücksichtigt werden können.

Weiterhin können Alterungseffekte im Flockungsmittel durch empirisch ermittelte Korrekturfaktoren berücksichtigt werden. Dabei kann es sich um empirisch ermittelte Daten zur Alterung eines konkreten Flockungsmittels handeln (sei es in Form von Wertetabellen oder empirischen Formeln). Nachteilig ist dabei lediglich, dass veränderte Alterungsraten durch Änderungen in der Zusammensetzung der wässrigen Komponente der Ansatzlösung oder des Flockungsmittels an sich, bei dieser Methode nicht berücksichtigt werden können.

Eine weitere Methode zur Berücksichtigung von Alterungseffekten des Flockungsmittels kann darin liegen, die Ladungsdichte des Flockungsmittels bzw. der Ansatzlösung des Flockungsmittels in regelmäßigen Abständen zu bestimmen und die jeweils aktuell ermittelten Werte der Flockungsmittel-Ladungsdichte in den Berechnungen der benötigten Zugabemenge zu berücksichtigen. Mit einem solchen Vorgehen lassen sich die zuverlässigsten und präzisesten Ergebnisse erzielen. Bei dieser Ausgestaltung müssen jedoch die technischen Voraussetzungen geschaffen werden, um die Ladungsdichte des Flockungsmittels regelmäßig zu bestimmen. Bei Ausbildung der Messeinrichtung als ein zum Entwässerungsaggregat (z.B. einer Dekanterzentrifuge oder Schneckenpresse) separatem Bauteil, muss gewährleistet sein, dass ein in der Messeinrichtung vorgesehenes Flockungsmittel-Reservoir mit einem Zugang zur manuellen oder automatischen Probenentnahme versehen ist, sodass zu gegebenen Zeitpunkten eine Probe des Flockungsmittels zur Ladungsdichte-Bestimmung entnommen werden kann. Bei einer automatisierten Ladungsdichte-Bestimmung des Flockungsmittels kann die Messung im Sinne eines Mehrkanal-Systems anstelle einer Bestimmung der Ladungsdichte der Suspension in der Messeinrichtung selbst stattfinden. Das Intervall in dem einer Ladungsdichtebestimmung der Suspension durch eine Ladungsdichtebestimmung des Flockungsmittels ersetzt wird, kann frei gewählt werden, in diesem Fall wird der Dosierwert (die Zugabemenge) für die Dauer der Bestimmung fortgeschrieben. Ebenso ist eine Erweiterung der Messeinrichtung um eine zusätzliche Einheit zur Bestimmung der Ladungsdichte des Flockungsmittels möglich, beispielsweise um eine zusätzliche Titrationseinheit.

Wie schon erwähnt kann es im Rahmen der Erfindung von Vorteil sein, die Flockungsmittel-Ladungsdichte in definierten zeitlichen Abständen zu überprüfen. Dieser repetitive Vorgang kann über eine Rechen- und Steuereinheit ausgeführt werden. Die zeitlichen Abstände zur Überprüfung der Flockungsmittel-Ladungsdichte sind dabei vorzugsweise länger als die zwischen den Messzeitpunkten zur Messung der Suspensions-Ladungsdichte anberaumten Zeitabstände.

Nach einer weiteren vorteilhaften Ausgestaltung der Erfindung kann ein geladenes Polymer, beispielsweise ein Polyelektrolyt, als Flockungsmittel verwendet werden. Im Allgemeinen werden auf Polymeren basierende Flockungsmittel als polymere Flockungsmittel (pFM) bezeichnet. Grundsätzlich sei an dieser Stelle erwähnt, dass sich die Auswahl des Flockungsmittels bzw. im hiesigen Zusammenhang die Auswahl des Polymers nach der Art und Zusammensetzung der zu entwässernden Suspension richtet. Beispielsweise kann sich ein bestimmtes Polymer als Flockungsmittel für einen wässrigen Klärschlamm eignen, während es für die Flockung von Feststoffpartikeln in einer bei der Papierproduktion anfallenden Suspension ungeeignet ist. Die Erfindung ist demnach nicht auf ein bestimmtes Polymer zur Verwendung als Flockungsmittel festgelegt, vielmehr können sämtliche bekannte und für die jeweiligen Suspensionen als Flockungsmittel verwendeten Polymere im Rahmen der Erfindung verwendet werden. Im Rahmen der Erfindung können beispielsweise organische, hochmolekulare und wasserlösliche Polyelektrolyte zum Einsatz kommen. Diese können auf synthetischem Wege erzeugt werden. In Frage komme zum Beispiel Polyelektrolyte auf der Basis von Polyacrylamid bzw. ganz allgemein Polymere auf der Basis von Acrylsäure. Weiterhin kommen Polymere auf Basis von Acrylsäure mit anpolymerisiertem Co-Polymer in Betracht (z.B. ADAME-Quat, MADAME-Quat oder DIMAPA-Quat), wobei das anpolymerisierte Co-Polymer die ladungsfunktionelle Gruppe bereitstellen kann. Gleichsam kann das Flockungsmittel ein Biopolymer sein, mit einer natürlichen ladungsfunktionellen Gruppe oder einer anpolymerisierten ladungsfunktionellen Gruppe. Wie schon eingangs erwähnt kommen Flockungsmittel bei der Reinigung kommunaler und industrieller Abwässer in Kläranlagen, der Wiederaufbereitung von Prozess- und Kreislaufwasser sowie der Klärung von Roh- oder Oberflächenwasser für die Gewinnung von Betriebs- oder Trinkwasser zum Einsatz. Den Flockungsmitteln unterliegt die Aufgabe die Sedimentation oder Flotation von Feststoffpartikeln zu beschleunigen und die Entwässerung von Suspensionen bei der Eindickung zu verbessern. Viele Entwässerungsaggregate wie Zentrifugen, Dekanter oder Bandfilter sind ohne die Zugabe von Flockungsmitteln kaum funktionsfähig.

Nach einer weiteren vorteilhaften Ausgestaltung der Erfindung kann ein anionisches oder ein kationisches Polymer als Flockungsmittel verwendet werden. Kationische Ladungen an Polymeren können beispielsweise durch anpolymerisierte funktionelle Gruppen ausgebildet werden. Beispielhaft seien ADAME-Quat, MADAME-Quat oder DIMAPA-Quat als mögliche an ein Polymer anpolymerisierte Co-Polymere genannt. Als anionisches Flockungsmittel kommt beispielsweise Natriumproprionat in Betracht. Auch kann vorgesehen sein, je nach vorliegender Ladungsdichte in der zu entwässernden Suspension bedarfsgerecht ein anionisches oder kationisches Polymer als Flockungsmittel auszuwählen. Dazu können in einem Entwässerungsaggregat getrennte Reservoirs zur Aufbewahrung von anionischem Polymer und kationischem Polymer vorgesehen sein. Über eine Rechen- und Steuereinheit kann eine mit den Reservoirs verbundene Zuführeinrichtung dahingehend gesteuert werden, dass eine bestimmte Menge entweder des anionischen oder kationischen Polymers in das Entwässerungsaggregat eingeleitet wird.

Nach einer weiteren vorteilhaften Ausgestaltung des erfindungsgemäßen Verfahrens kann die Suspensions-Ladungsdichte in regelmäßigen oder unregelmäßigen zeitlichen Abständen ermittelt werden, wobei die zeitlichen Abstände manuell vorgegeben oder automatisch ermittelt werden können. Je kleiner die zeitlichen Abstände zwischen den Messzeitpunkten der Suspensions-Ladungsdichte, desto präziser ist die Verfahrenskontrolle und die damit verbundene Einstellung der optimalen Flockungsbedingungen. Denn je häufiger die Suspensions-Ladungsdichte in einem bestimmten Zeitraum überprüft (und das Flockungsmittel zur Gewährleistung optimaler Flockungsbedingungen nachdosiert wird), desto kürzer sind etwaige Zeiträume mit von den optimalen Flockungsbedingungen abweichenden Bedingungen. Jedoch kann die Suspensions-Ladungsdichte auch in unregelmäßigen Zeitintervallen überprüft werden, beispielsweise in Folge einer manuellen Befehlseingabe. Dies kann beispielsweise von Nöten sein, wenn seitens des Betriebspersonals eines Entwässerungsaggregats aufgrund von Betriebsparametern des Entwässerungsaggregats oder aufgrund von visueller Inspektion festgestellt wird, dass der Flockungsvorgang von einer idealen Flockung abweicht.

Nach einer weiteren vorteilhaften Ausgestaltung der Erfindung kann vorgesehen sein, dass die Suspensions-Ladungsdichte in einer Strömungspotential-Messzelle ermittelt wird, wobei der Strömungspotential-Messzelle automatisiert ein definiertes Probenvolumen der Suspension zugeführt wird. Die Strömungspotential-Messzelle kann Bestandteil einer übergeordneten Messeinrichtung oder eines Messsystems sein. Die Messeinrichtung (samt Messzelle) kann in ein Entwässerungsaggregat integriert oder zumindest mit diesem verbunden sein, sowohl steuerungstechnischer Hinsicht als auch zur Gewährleistung einer (automatisierten) Probenentnahme zu den vorgegebenen Messzeitpunkten.

Nach einer weiteren vorteilhaften Ausgestaltung der Erfindung kann vorgesehen sein, dass zumindest die Verfahrensschritte c. und d. unter Einsatz einer Rechen- und Steuereinheit automatisiert ausgeführt werden. Die Rechen- und Steuereinheit kann Bestandteil der Messeinrichtung sein. Entsprechend kann die Messeinrichtung (samt Rechen- und Steuereinheit) portabel ausgebildet sein und in verschiedenste Entwässerungsaggregate implementiert oder mit diesen steuerungstechnisch verbunden werden. Auch kann die Messeinrichtung eine Probenentnahmeeinheit aufweisen, beispielsweise eine Pumpe. Im Falle einer portablen Ausbildung der Messeinrichtung kann die Probenentnahmeeinrichtung über einen Zulauf mit dem Entwässerungsaggregat verbunden werden, sodass die Messeinrichtung (automatisiert) Proben aus der zu entwässernden Suspension ziehen kann. Die Rechen- und Steuereinheit der Messeinrichtung kann steuerungstechnisch mit der Steuerung des Entwässerungsaggregats verbunden sein. Bei portabel ausgebildeter Messeinrichtung beispielsweise über eine kabellose Datenverbindung, oder alternativ über ein Signal- und Datenübertragungskabel. Die Messeinrichtung bzw. die Rechen- und Steuereinheit ist dazu mit einer geeigneten Datenschnittstelle versehen. Bei unmittelbarer baulicher Integration der Messeinrichtung in ein Entwässerungsaggregat, kann auch eine gemeinsame Rechen- und Steuereinheit zur Steuerung des Entwässerungsaggregats wie auch der Messeinrichtung vorgesehen sein. Ohnehin werden die ablaufenden Prozesse der Flockungsmittelzugabe und der Messung steuerungstechnisch aufeinander abgestimmt. Praktisch bedeutet dies, dass die Rechen- und Steuereinheit nach dem Ermitteln der zu einem bestimmten Zeitpunkt benötigten Zugabemenge an Flockungsmittel, einen Befehl zur Dosierung einer entsprechenden Menge an Flockungsmittel an eine entsprechende Einheit des Entwässerungsaggregats weiterleitet.

Erfindungsgemäß basiert die Ermittlung und Zugabe der benötigten Zugabemenge des Flockungsmittels auf einer mengenproportionalen Regelung, einer frachtproportionalen Regelung.

Wie bereits zuvor erwähnt, ist ein Kerngedanke der Erfindung auf die bedarfsgerechte Zugabe des Flockungsmittels in das zu entwässernde System (beispielsweise eine fest-flüssig Suspension) gerichtet. Bedarfsgerecht meint an dieser Stelle, dass die Menge des der Suspension zu einem bestimmten Zeitpunkt des Entwässerungsprozesses zugefügten Flockungsmittels an aktuelle, in der Suspension und dem Flockungsmittel vorherrschende Bedingungen angepasst wird, um über den gesamten Zeitraum des Entwässerungsverfahrens eine erfolgreiche und effiziente Flockung zu gewährleisten. Die Zugabe des Flockungsmittels kann dabei auf verschiedene Arten geregelt werden.

Nachfolgend sind vier unterschiedliche Verfahrensvarianten zur Regelung der Flockungsmittelzugabe in dem erfindungsgemäßen Verfahren beschrieben. Entsprechend sind alle vier der nachfolgend beschriebenen Verfahrensvarianten in den Gegenstand des erfindungsgemäßen Verfahrens einbezogen und stellen demnach vorteilhafte Ausgestaltungen der Erfindung dar.

Zunächst kann die Ermittlung und Zugabe der benötigten Zugabemenge des Flockungsmittels auf einer mengenproportionalen Regelung basieren. Bei der mengenproportionalen Regelung erfolgt die Zugabe des Flockungsmittels proportional zur Beschickungsmenge des Trennaggregats, in welchem sich die zu entwässernde Suspension befindet. Das Trennaggregat (z.B. Dekanterzentrifuge) ist folglich als körperliches Behältnis oder als körperliche Vorrichtung aufzufassen, in welchem/r die fest-flüssig Trennung durchgeführt wird. In der Regel ist die Beschickungsmenge fest eingestellt. Üblicherweise wird die Menge des Flockungsmittels bei einer mengenproportionalen Regelung proportional zur Beschickungsmenge berechnet, beispielsweise in der Festsetzung einer Zugabemenge in Litern pro Stunde. Bei einer mengenproportionalen Regelung ist die Zugabemenge in der Regel nicht in einer Massenangabe des zuzugebenden Flockungsmittels pro Volumen oder Zeiteinheit angegeben. Entsprechend muss bei einer solchen Regelung die Ansatzkonzentration des Flockungsmittels (beispielsweise einer wässrigen Polymerlösung) berücksichtigt werden. Diese Konzentration kann entweder in der Rechen- und Steuereinheit hinterlegt oder in der Messeinrichtung bzw. extern gemessen werden. Bei einer mengenproportionalen Regelung bzw. Dosierung kann die Zugabemenge (einem bestimmten Messzeitpunkt folgend) wie folgt berechnet werden:

$$D_{p,N} = D_{p,A} + (dEq_z - dEq_M) / dEq_p$$

wobei $D_{p,N}$ die Zugabemenge zu einem Zeitpunkt N angibt, $D_{p,A}$ die Zugabemenge zu einem dem Zeitpunkt N unmittelbar vorangehenden Zeitpunkt A angibt, $dEq_z$ die Zielladungsdichte der Suspension angibt, $dEq_M$ die an einem dem Zeitpunkt N zugeordneten Messzeitpunkt ermittelte Suspensions-Ladungsdichte angibt und $dEq_p$ die Flockungsmittel-Ladungsdichte angibt. Abweichungen von den idealen Dimensionen der Parameter können durch Korrekturfaktoren oder durch Umrechnung mit bekannten Größen berücksichtigt werden.

Bei einer frachtproportionalen Regelung wird üblicherweise ein Dosierkennwert bzw. Zugabemengenkennwert vorgegeben. Der Dosierkennwert hat dabei in der Regel die Dimension Kilogramm Flockungsmittel pro Tonne Feststoffgehalt der Suspension. Aus dem Stand der Technik ist bekannt, den Dosierwert fest einzustellen, im Rahmen der hiesigen Erfindung kann der Dosierwert hingegen als variabler Wert kontinuierlich ermittelt werden. Der Dosier- bzw. Zugabewert hat im Idealfall die Dimension Liter Flockungsmittel pro Kilogramm Feststoffgehalt der Suspension. Entsprechend ist eine solche Regelungsart nur möglich, wenn eine Feststoffsonde im Suspensionszulauf des Entwässerungsaggregats zur Bestimmung des Feststoffgehalts vorgesehen ist. Als geeignete Feststoffsonde kommen beispielsweise optische Verfahren aus Basis von Lichtstreuung oder Mikrowellenstrahlung in Betracht. Der Feststoffgehalt der Suspension wird dabei in der Regel in der Dimension Kilogramm Trockensubstanz pro Liter Suspension angegeben. Bei einer frachtproportionalen Regelung bzw. Dosierung kann die Zugabemenge (einem bestimmten Messzeitpunkt folgend) wie folgt berechnet werden:

$$D`_{p,N} = D`_{p,A} + ((dEq_z - dEq_M) / dEq_p) / fTS_S$$

wobei $D'_{p,N}$ die Zugabemenge zu einem Zeitpunkt N angibt, $D'_{p,A}$ die Zugabemenge zu einem dem Zeitpunkt N unmittelbar vorangehenden Zeitpunkt A angibt und $fTs$ den Feststoffgehalt der Suspension angibt. Die Variablen $dEq_z$, $dEq_M$ und $dEq_p$ sind äquivalent zu den vorangehend im Rahmen der mengenproportionalen Regelung beschriebenen Definitionen. Auch bei einer frachtproportionalen Regelung können Abweichungen von den idealen Dimensionen der Parameter durch Korrekturfaktoren oder durch Umrechnung mit bekannten Größen berücksichtigt werden.

Bei einer Proportionalregelung (die kein Teil der vorliegenden Erfindung ist) wird die Suspensions-Ladungsdichte in der abgeschiedenen flüssigen Phase der Suspension bestimmt und eine Differenz aus der Zielladungsdichte und der ermittelten Ladungsdichte gebildet. Über Multiplikation mit einem bestimmten Dosierungsfaktor kann damit eine Zugabemenge berechnet werden. Dabei kann der Dosierungsfaktor einen festen Wert annehmen, oder aus einer hinterlegten Datentabelle entnommen werden. Bei dem Dosierungsfaktor handelt es sich um einen empirisch bestimmten Wert. Überschlagsmäßig kann der Dosierfaktor auch mit theoretischen Wertepaaren über die Berechnungsgrundlagen der mengenproportionalen Regelung bzw. der frachtproportionalen Regelung berechnet werden. Bei einer Proportionalregelung kann die Zugabemenge (einem bestimmten Messzeitpunkt folgend) wie folgt berechnet werden:

$$D''_{p,N} = D''_{p,A} + ((dEq_z - dEq_M) / dEq_p) \times F_D$$

wobei wobei $D''_{p,N}$ die Zugabemenge zu einem Zeitpunkt N angibt, $D''_{p,A}$ die Zugabemenge zu einem dem Zeitpunkt N unmittelbar vorangehenden Zeitpunkt A angibt und $F_D$ den einheitslosen (und empirisch ermittelten) Dosierungsfaktor angibt. Die Variablen $dEq_z$, $dEq_M$ und $dEq_p$ sind äquivalent zu den vorangehend im Rahmen der mengenproportionalen Regelung beschriebenen Definitionen. Auch bei einer Proportionalregelung können Abweichungen von den idealen Dimensionen der Parameter durch Korrekturfaktoren oder durch Umrechnung mit bekannten Größen berücksichtigt werden.

Weiterhin kann die Ermittlung und Zugabe der benötigten Zugabemenge des Flockungsmittels auf einer PID-Regelung basieren, dies formt jedoch kein Teil der vorliegenden Erfindung. Ein PID (proportional-integral-derivative controller) umfasst ein P-Glied (Proportionalregler), ein I-Glied (Integralregler) und ein D-Glied (Differentialregler) und kann sowohl in Parallelstruktur als auch in Reihenstruktur definiert werden. Unter Verwendung eines PID Reglers wird die gemessene Suspensions-Ladungsdichte mit der Zielladungsdichte verglichen.

Die Regelung erhöht oder verringert die Zugabemenge des Flockungsmittels solange, bis die Zielladungsdichte erreicht ist.

Nach einer weiteren Ausgestaltung der Erfindung kann das Verfahren zur Verwendung in einem kontinuierlichen Entwässerungsverfahren für fest-flüssig Suspensionen vorgesehen sein.

Vorteilhaft kann das der Erfindung zugrunde liegende Verfahren in einem Entwässerungsverfahren von Klärschlamm eingesetzt werden. Klärschlamm ist im Vergleich zu vielerlei anderer fest-flüssig Suspensionen (z.B. Sand in Wasser) relativ trüb. Entsprechend sind optische Methoden zur Bestimmung der Ladungsdichte nur minder geeignet. Aufgrund der Strömungspotential basierten Messung der Suspensions-Ladungsdichte ist das hiesige Verfahren unabhängig vom Trübungsgrad. Folglich entfaltet das erfindungsgemäße Verfahren seine besonderen Vorteile insbesondere im Rahmen von Entwässerungsverfahren trüber Suspensionen wie Klärschlamm.

Das erfindungsgemäße Verfahren kann ohne Weiteres bei der Filtration, Sedimentation, Flotation, Eindickung oder Entwässerung von Klärschlamm eingesetzt werden. Letztlich kommt eine Verwendung des Verfahrens in jeglichen Verfahrensschritten eines Entwässerungsverfahrens in Betracht, bei dem eine Flockung von Feststoffpartikeln der Suspension durchgeführt wird. Betont sei an dieser Stelle, dass die Messungen der Suspensions-Ladungsdichte unter Einsatz der Strömungspotential-Messzelle auch im unbehandelten Zulauf des Entwässerungsaggregats erfolgen kann. Hierbei wird zwar kein Überschuss bzw. Defizit an Flockungsmittel bestimmt, sondern der tatsächliche Gesamtbedarf an Flockungsmittel in der zu behandelnden Suspension.

Eine die Messzelle zur Ausführung der titrimetrischen Analyse im Rahmen des Verfahrensschritts c. enthaltende Messeinrichtung kann sowohl im Zulauf als auch im Ablauf eines Entwässerungsaggregats eingesetzt werden. Dabei kann die Messeinrichtung wie vorangehend erwähnt auch weitere Bestandteile umfassen, beispielsweise eine Rechen- und Steuereinheit und eine Einrichtung zur Probenentnahme.

Wie bereits erwähnt, wird die der vorliegenden Erfindung zugrunde liegende Aufgabenstellung ebenso mit einem System gemäß dem Patentanspruch 14 gelöst.

Das erfindungsgemäße System ist zur Ausführung des erfindungsgemäßen Verfahrens zur Flockung von in einer Suspension enthaltenen Feststoffpartikeln eingerichtet. Das System umfasst eine Rechen- und Steuereinheit, eine Messzelle, und eine Dosiereinheit, wobei die Rechen- und Steuereinheit signaltechnisch mit der Messzelle und der Dosiereinheit verbunden ist. Dabei können die genannten Komponenten (zumindest die Rechen- und Steuereinheit und die Messzelle) auch baulich zusammengefasst sein, beispielsweise in einem gemeinsamen Gehäuse. Das System kann fest in einem Entwässerungsaggregat installiert werden oder mobil ausgebildet sein.

Die dem System zugehörige Messzelle ist dazu eingerichtet, die in der Suspension vorliegende Suspensions-Ladungsdichte zu einer Vielzahl von Messzeitpunkten im Wege einer titrimetrischen Analyse unter Messung des Strömungspotentials zu ermitteln und die so erhaltenen Daten an die Rechen- und Steuereinheit weiterzuleiten.

Die dem System ebenfalls zugehörige Rechen- und Steuereinheit ist dazu eingerichtet, eine zu den jeweiligen Messzeitpunkten zur Gewährleistung einer optimalen Flockung benötigte Zugabemenge des Flockungsmittels basierend auf der zu dem jeweiligen Messzeitpunkt ermittelten Suspensions-Ladungsdichte, einer bereitgestellten Zielladungsdichte der Suspension, sowie einer Flockungsmittel-Ladungsdichte zu berechnen. Grundsätzlich muss die Rechen- und Steuereinheit nicht physisch mit den weiteren Komponenten verbunden sein, d.h. sie muss nicht zwingend mit der Messzelle in einem Gehäuse zusammengefasst sein. Die Rechen- und Steuereinheit kann sich sogar auf einem externen Server befinden, der mit einer an der Messzelle angeordneten Schnittstelle zum Datenaustausch über eine Signal- und Datenverbindung verbunden ist.

Weiterhin ist die Rechen- und Steuereinheit dazu eingerichtet, ein auf der benötigten Zugabemenge des Flockungsmittels basierendes Dosiersignal an die Dosiereinheit weiterzuleiten. Entsprechend dem Dosiersignal wird der zu entwässernden Suspension die erforderliche Zugabemenge des Flockungsmittels hinzugegeben (die Dosiereinheit ist also dazu eingerichtet, der Suspension in Folge des Dosiersignals die benötigte Zugabemenge des Flockungsmittels zuzugeben). Die Dosiereinheit befindet sich dabei vorzugsweise unmittelbar an dem Entwässerungsaggregat. Sowohl die Dosiereinheit, als auch die Messzelle können mit Mikrocontrollern versehen sein, die mit der Rechen- und Steuereinheit im Signal- und Datenaustausch stehen. Das System (sei es die Steuer- und Recheneinheit oder jene die Messzelle enthaltende Messeinrichtung) kann zudem eine Anzeigeeinheit aufweisen, über die einem Benutzer das Ende einzelner Messungen oder des Gesamt-Verfahrensablaufs angezeigt werden kann.

Weitere Vorteile, Ausgestaltungen und Weiterbildungen, die im Zusammenhang mit dem erfindungsgemäßen Verfahren bzw. dem erfindungsgemäßen System stehen, sind anhand der nachfolgend beschriebenen Ausführungsbeispiele genauer erläutert. Diese sollen dem Fachmann die Erfindung verdeutlichen und ihn in die Lage versetzen, die Erfindung auszuführen, ohne jedoch die Erfindung zu beschränken. Die anhand der Ausführungsbeispiele beschriebenen Merkmale können ebenfalls zur Weiterbildung des erfindungsgemäßen Verfahrens herangezogen werden. Im Zusammenhang der Beschreibung der genannten Ausführungsbeispiele sei auf die folgenden Figuren Bezug genommen, anhand welcher das erfindungsgemäße Verfahren bzw. das erfindungsgemäße System genauer erläutert wird. So zeigt:

Figur 1    eine schematische Übersichtsdarstellung des erfindungsgemäßen Systems beim Einsatz in einer Dekanterzentrifuge als beispielhaftem Entwässerungsaggregat, in Bezug auf eine mengenproportionale Regelung, eine Proportionalregelung und eine PID Regelung;

Figur 2    eine schematische Übersichtsdarstellung des erfindungsgemäßen Systems beim Einsatz in einer Dekanterzentrifuge als beispielhaftem Entwässerungsaggregat, in Bezug auf eine frachtproportionale Regelung, eine Proportionalregelung und eine PID Regelung;

Figur 3    eine schematische Darstellung des Ablaufs des erfindungsgemäßen Verfahrens.

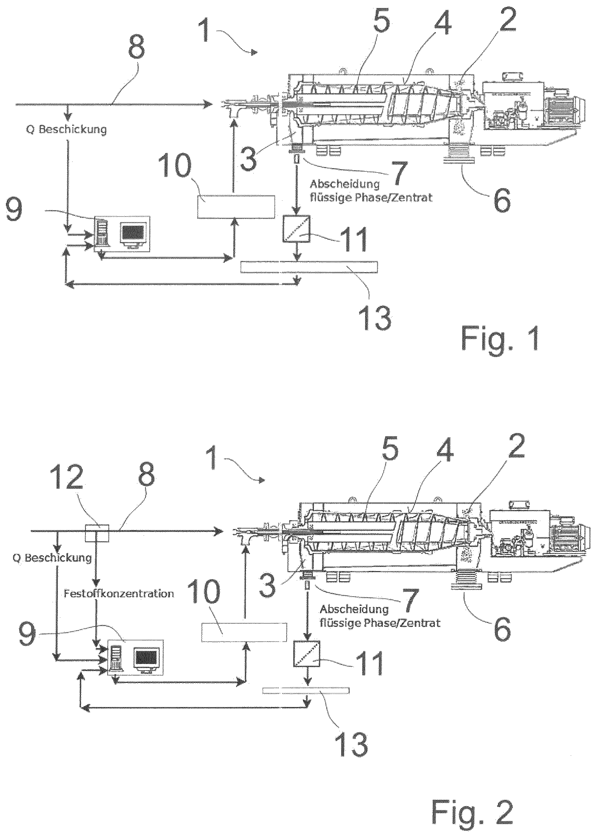

In den Figuren 1 und 2 ist das erfindungsgemäße System beim Einsatz in Verbindung mit einer Dekanterzentrifuge 1 als beispielhaften Entwässerungsaggregat wiedergegeben. Ausdrücklich sei an dieser Stelle betont, dass es sich dabei lediglich um eine beispielhafte Darstellung handelt, anhand der das erfindungsgemäße System bzw. Verfahren veranschaulicht werden soll. Gleichermaßen kann das erfindungsgemäße System bzw. Verfahren bei anderweitigen Entwässerungsaggregaten zum Einsatz kommen.

Mit einer solchen Dekanterzentrifuge 1 kann eine Phasentrennung einer Suspension durchgeführt werden, beispielsweise im Rahmen eines Klärschlammentwässerungsprozesses. Dabei werden die in der Suspension (z.B. dem Klärschlamm) enthaltenen Feststoffpartikel 2 von der flüssigen Phase (z.B. Wasser) abgetrennt und abgeschieden. Hierzu wird in der Zentrifuge die Erdbeschleunigung durch die wesentlich höhere Zentrifugalbeschleunigung ersetzt. Die Feststoffpartikel 2 sammeln sich aufgrund ihrer höheren Dichte an der Trommelwand 4 und werden mit Hilfe einer Förderschnecke 5 zu entsprechenden Austragsöffnungen 6 transportiert. Gleichzeitig fließt die geklärte Flüssigkeit 3 an der Schnecke 5 entlang in die Flüssigkeitsaustragszone 6.

Die Figur 1 illustriert den schematischen Ablauf einer mengenproportionalen Regelung der Flockungsmittelzugabe. Über einen Zulaufstrom 8 wird die Dekanterzentrifuge 1 mit der zu entwässernden Suspension (dem Klärschlamm) beschickt. Dies kann kontinuierlich oder diskontinuierlich erfolgen. Unter einer kontinuierlichen Beschickung ist dabei eine Beschickung mit einem andauernden Suspensions-Volumenstrom zu verstehen. Diskontinuierliche Beschickung meint, dass die Dekanterzentrifuge 1 mit einem festen Volumen einer Suspension gespeist wird, in diesem Fall erfolgt die Beschickung nicht andauernd, sondern batchweise. Vor dem Beginn des in der Zentrifuge 1 ablaufenden Entwässerungsvorgangs, wird die Zielladungsdichte $dEq_Z$ der Suspension angegeben, also einem bei der Entwässerung angestrebtem Zielwert, bei dem eine optimale Flockung erfolgt. Vorzugsweise korrespondiert die Zielladungsdichte $dEq_Z$ zu jener am isoelektrischen Punkt der Suspension vorliegenden Ladungsdichte. Die Zielladungsdichte $dEq_Z$ kann beispielsweise im Wege einer gesonderten Laboruntersuchung bestimmt werden. Dazu kann aus dem Zulaufstrom 8 der Suspension eine Probe entnommen und analysiert werden. Die so ermittelte Zielladungsdichte $dEq_Z$ kann zur weiteren Ausführung des erfindungsgemäßen Verfahrens einer Rechen- und Steuereinheit 9 bereitgestellt werden, beispielsweise durch manuelle Eingabe eines Benutzers. Weiterhin kann der genannte Vorgang (Probenentnahme der Suspension, Bestimmung der Zielladungsdichte $dEq_Z$) auch automatisiert erfolgen. Auch anderweitige Methoden zur Bestimmung oder Angabe der Zielladungsdichte können im Rahmen der Erfindung Verwendung finden. In der Rechen- und Steuereinheit 9 wird das erfindungsgemäße Verfahren gesteuert und geregelt.

Wie ebenfalls aus der Figur 1 ersichtlich, regelt die Rechen- und Steuereinheit 9 die Zugabe des für die Flockung bzw. die Entwässerung benötigten Flockungsmittels, beispielsweise über eine eigens dazu vorgesehene Dosiereinheit 10. Im Rahmen des erfindungsgemäßen Verfahrens ist die Ladungsdichte $dEq_p$ des verwendeten Flockungsmittels bekannt und wird dem erfindungsgemäßen Verfahren als Input-Parameter zugrunde gelegt. Die Rechen- und Steuereinheit 9 legt die Flockungsmittel-Ladungsdichte $dEq_p$ dem erfindungsgemäßen Verfahren bei der Verfahrensführung zugrunde. Die Flockungsmittel-Ladungsdichte $dEq_p$ kann dabei von einem Hersteller oder Anbieter des Flockungsmittels angegeben werden, oder aber seitens eines Benutzers (sei es ein Anwender wie einem Kunden oder den Inverkehrbringenden wie einem Händler oder Serviceprovider) des erfindungsgemäßen Verfahrens selbst ermittelt werden, beispielsweise im Wege einer Laboruntersuchung. Die Flockungsmittel-Ladungsdichte $dEq_p$ kann zu einer Mehrzahl von Zeitpunkten des Verfahrensablaufs bzw. des Entwässerungsvorgangs überprüft werden. Zuvor ermittelte Werte werden dann von den aktuell ermittelten Werten ersetzt.

Nach der Beschickung der Dekanterzentrifuge 1 mit der zu entwässernden Suspension wird zu einer Vielzahl von Messzeitpunkten die in der Suspension (zu den jeweiligen Zeitpunkten) vorliegende Suspensions-Ladungsdichte $dEq_M$ ermittelt. Dazu wird (beispielsweise aus der Flüssigkeitsaustragungszone 7 der Dekanterzentrifuge 1) eine Probe entnommen und die Suspensions-Ladungsdichte $dEq_M$ im Wege einer titrimetrischen Analyse unter Messung des Strömungspotentials bestimmt. Die Entnahme kann beispielsweise über eine eigens zur Probenentnahme vorgesehene Entnahmeeinheit 11 erfolgen. Die Entnahmeeinheit 11 kann dabei von der Rechen- und Steuereinheit 9 angesteuert und zur Probenentnahme an den jeweiligen Messzeitpunkten aufgefordert werden. Auch kann die Entnahmeeinheit 11 einen Mikrocontroller aufweisen, in welchem die entsprechenden Zeitpunkte zur Probenentnahme vorgegeben bzw. einprogrammiert sind. Die eigentliche Bestimmung der Suspensions-Ladungsdichte erfolgt in einer Messzelle 13. Die Probenentnahme samt der darauffolgenden titrimetrischen Analyse sind Teil einer erfindungsgemäßen Verfahrensroutine. Die gemessene Suspensions-Ladungsdichte $dEq_M$ wird - wie anhand des Verlaufs der Pfeile kenntlich gemacht - an die Rechen- und Steuereinheit 9 weitergegeben.

Die Rechen- und Steuereinheit 9 ermittelt die zu den jeweiligen Messzeitpunkten benötigte Zugabemenge $D_p$ des Flockungsmittels, um durchgängig eine optimale Flockung zu gewährleisten. Die Zugabemenge $D_p$ des Flockungsmittels wird dabei basierend auf der Zielladungsdichte $dEq_Z$, der Flockungsmittel-Ladungsdichte $dEq_p$ und der zu dem jeweiligen Messzeitpunkt vorliegenden Suspensions-Ladungsdichte $dEq_M$ ermittelt.

Im Anschluss an die jeweiligen Messzeitpunkte wird dem Entwässerungsaggregat bzw. der Dekanterzentrifuge 1 über eine Dosiereinheit 10 die benötigte Menge an Flockungsmittel hinzugefügt. Sofern zu einem bestimmten Zeitpunkt keine weitere Zugabe an Flockungsmittel erforderlich ist, gibt die Steuer- und Recheneinheit 9 keinen Zugabebefehl an die Dosiereinheit 10 weiter.

Mit der beschriebenen Verfahrensführung wird eine bedarfsgerechte Zugabe eines Flockungsmittels unter Vermeidung von Unter- und Überdosierungen ermöglicht.

Die Figur 2 gibt eine schematische Darstellung des erfindungsgemäßen Systems bzw. Verfahrens bei einer frachtproportionalen Regelung wieder. Der Rechen- und Steuereinheit 9 werden im Vergleich zu einer mengenproportionalen Regelung (vgl. Figur 1) zusätzlich Informationen zum initialen (d.h. der Entwässerung vorangehenden) Zeitpunkt zugrunde gelegt. Der Feststoffgehalt kann beispielsweise über eine Feststoffsonde 12 ermittelt werden, die im Suspensionszulauf des Trennaggregats (hier der Dekanterzentrifuge 1) verbaut ist. Die weiteren in der Figur 2 dargestellten Komponenten entsprechen jenen in der Darstellung nach Figur 1 wiedergegebenen und vorangehend beschriebenen Systembestandteilen. Für Details der im Rahmen der vorliegenden Erfindung verwendeten Regelung (z.B. mengenproportionale Regelung, frachtproportionale Regelung, Proportionalregelung, PID-Regelung) sei auf den der Figurenbeschreibung vorangehenden Teil der Beschreibung verwiesen.

Wie eingangs beschrieben, umfasst die vorliegende Erfindung auch ein System zur Ausführung des erfindungsgemäßen Verfahrens. Die wesentlichen Bestandteile des Systems sind die Rechen- und Steuereinheit 9, die Messzelle 13, und die Dosiereinheit 10.

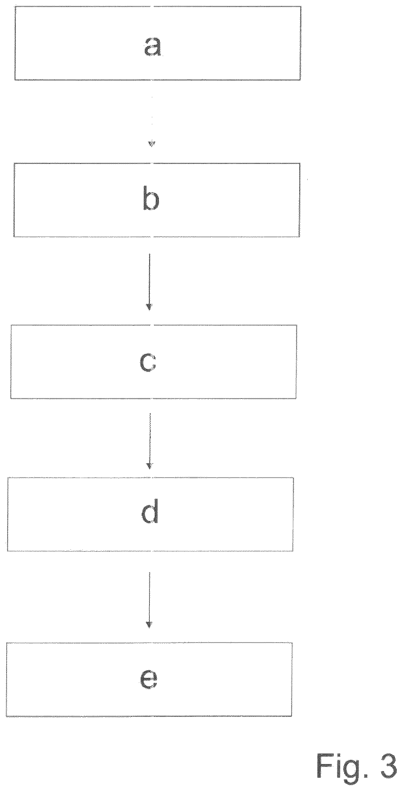

In der Figur 3 sind die einzelnen Verfahrensschritte des erfindungsgemäßen und im Patentanspruch 1 beanspruchten Verfahrens stark schematisiert wiedergegeben. Die Zuordnung der Verfahrensschritte a. bis e. entspricht jenen im Patentanspruch 1 definierten Schritten. Nachfolgend seien die wesentlichen Schritte des erfindungsgemäßen Verfahrens nochmals in Kürze zusammengefasst.

So wird in einem Verfahrensschritt a. eine Suspension bereitgestellt und eine Zielladungsdichte $dEq_Z$ der Suspension angegeben, jedoch mit der Maßgabe, dass die Zielladungsdichte $dEq_Z$ jene Ladungsdichte der Suspension ist, bei welcher die Feststoffpartikel flocken. In einem Verfahrensschritt b. wird ein Flockungsmittel bereitgestellt, wobei das Flockungsmittel eine Flockungsmittel-Ladungsdichte $dEq_p$ aufweist. Getreu einem Verfahrensschritt c. wird zu einer Vielzahl von Messzeitpunkten die in der Suspension vorliegende Suspensions-Ladungsdichte $dEq_M$ im Wege einer titrimetrischen Analyse unter Messung des Strömungspotentials ermittelt. In einem darauffolgenden Verfahrensschritt d. wird eine zu den jeweiligen Messzeitpunkten zur Gewährleistung einer optimalen Flockung benötigte Zugabemenge $D_p$

des Flockungsmittels berechnet, nämlich basierend auf der Zielladungsdichte $dEq_Z$, der Flockungsmittel-Ladungsdichte $dEq_p$, und der zu dem jeweiligen Messzeitpunkt vorliegenden Suspensions-Ladungsdichte $dEq_M$. Getreu einem Verfahrensschritt e. wird im Anschluss an die jeweiligen Messzeitpunkte die ermittelte Zugabemenge $D_p$ des Flockungsmittels in die Suspension gegeben.

Je nach Anzahl der Messzeitpunkte werden die Verfahrensschritte c. bis e. in einer den Messzeitpunkten entsprechenden Anzahl wiederholt.

**Bezugszeichenliste**

| 1 | Dekanterzentrifuge |
| 2 | Feststoffpartikel |
| 3 | Flüssigkeit |
| 4 | Trommelwand |
| 5 | Förderschnecke |
| 6 | Austragsöffnung |
| 7 | Flüssigkeitsaustragszone |
| 8 | Zulaufstrom |
| 9 | Rechen- und Steuereinheit |
| 10 | Dosiereinheit |
| 11 | Entnahmeeinheit |
| 12 | Feststoffsonde |
| 13 | Messzelle |

**Patentansprüche**

**1.** Verfahren zur Flockung von in einer Suspension enthaltenen Feststoffpartikeln (2), umfassend die folgenden Schritte:

a. Bereitstellen einer Suspension und Angeben einer Zielladungsdichte ($dEq_Z$) der Suspension, mit der Maßgabe, dass die Zielladungsdichte ($dEq_Z$) jene Ladungsdichte der Suspension ist, bei welcher die Feststoffpartikel (2) flocken;

b. Bereitstellen eines Flockungsmittels, wobei das Flockungsmittel eine Flockungsmittel-Ladungsdichte ($dEq_p$) aufweist;

c. zu einer Vielzahl von Messzeitpunkten (N): Ermitteln einer in der Suspension vorliegenden Suspensions-Ladungsdichte ($dEq_M$) im Wege einer als Ladungstitration durchgeführten titrimetrischen Analyse unter Messung des Strömungspotentials mit einer Messzelle in Form eines Streaming Current Detectors, wobei dies unter der Annahme erfolgt, dass sich lediglich überschüssiges freies Flockungsmittel, also jene Flockungsmittelmoleküle oder Flockungsmittelpartikel, deren Oberflächenladung nicht durch Gegenionen kompensiert sind, an einer Wandung der Messzelle anlagert, wobei bei dieser Annahme ein entlang der Wandung ausgebildetes und messbares elektrisches Potential in unmittelbarem Zusammenhang mit dem Überschuss an freiem Flockungsmittel steht, wobei der Überschuss an freiem Flockungsmittel mit einem Titranten durch Bildung von stabilen Ionenpaaren titriert wird, wobei sich das in den Ionenpaaren gebundene Flockungsmittel nicht mehr an die Wandung anlagert, wobei das messbare elektrische Potential im Laufe der Titration sinkt bis das Flockungsmittel nicht mehr zu diesem beiträgt und vollständig durch den Titranten kompensiert ist;

d. Ermitteln einer zu den jeweiligen Messzeitpunkten (N) zur Gewährleistung einer optimalen Flockung benötigten Zugabemenge ($D_{p,N}$, $D'_{p,N}$) des Flockungsmittels, die auf einer mengenproportionalen Regelung oder einer frachtproportionalen Regelung basiert, wobei die zu einem Messzeitpunkt (N) bei einer mengenproportionalen Regelung benötigte Zugabemenge $D_{p,N}$ berechnet wird nach

$$D_{p,N} = D_{p,A} + (dEq_Z - dEq_M)/dEq_P,$$

mit $D_{p,A}$ als Zugabemenge zu einem dem Messzeitpunkt (N) unmittelbar vorangehenden Zeitpunkt, wobei die zu einem Messzeitpunkt (N) bei einer frachtproportionalen Regelung benötigte Zugabemenge $D'_{p,N}$ berechnet wird nach

$$D'_{p,N} = D'_{p,A} + ((dEq_Z - dEq_M)/dEq_P)/fTS_s,$$

mit $D'_{p,A}$ als Zugabemenge zu einem dem Messzeitpunkt (N) unmittelbar vorangehenden Zeitpunkt und $fTS_s$ als Feststoffgehalt der Suspension;

e. im Anschluss an die jeweiligen Messzeitpunkte (N): Zugeben der ermittelten Zugabemenge ($D_{p,N}$, $D'_{p,N}$) des Flockungsmittels in die Suspension.

2. Verfahren nach Anspruch 1, **dadurch gekennzeichnet, dass** die Zielladungsdichte ($dEq_Z$) festgelegt oder im Wege einer gesonderten Laboruntersuchung ermittelt wird, beispielsweise im Wege einer Titration.

3. Verfahren nach Anspruch 2, **dadurch gekennzeichnet, dass** die Zielladungsdichte ($dEq_Z$) für eine bestimmte Suspension einmalig oder regelmäßig ermittelt wird.

4. Verfahren nach Anspruch 1, **dadurch gekennzeichnet, dass** die Flockungsmittel-Ladungsdichte ($dEq_p$) festgelegt, aus empirischen Daten abgeleitet, oder im Wege einer gesonderten Untersuchung ermittelt wird, beispielsweise im Wege einer Titration, die automatisch in der Messeinrichtung oder im Labor durchgeführt wird.

5. Verfahren nach Anspruch 3, **dadurch gekennzeichnet, dass** die Flockungsmittel-Ladungsdichte ($dEq_p$) in definierten zeitlichen Abständen überprüft wird.

6. Verfahren nach einem der vorangehenden Ansprüche, **dadurch gekennzeichnet, dass** ein geladenes Polymer, beispielsweise ein Polyelektrolyt, als Flockungsmittel verwendet wird.

7. Verfahren nach Anspruch 6, **dadurch gekennzeichnet, dass** ein anionisches oder ein kationisches Polymer als Flockungsmittel verwendet wird.

8. Verfahren nach Anspruch 1, **dadurch gekennzeichnet, dass** die Suspensions-Ladungsdichte ($dEq_M$) in regelmäßigen oder unregelmäßigen zeitlichen Abständen ermittelt wird, wobei die zeitlichen Abstände manuell vorgegeben oder automatisch ermittelt werden können.

9. Verfahren nach einem der vorangehenden Ansprüche, **dadurch gekennzeichnet, dass** der Messzelle automatisiert ein definiertes Probenvolumen der Suspension zugeführt wird.

10. Verfahren nach Anspruch 1, **dadurch gekennzeichnet, dass** zumindest die Verfahrensschritte c. und d. unter Einsatz einer Rechen- und Steuereinheit (9) automatisiert ausgeführt werden.

11. Verfahren nach einem der vorangehenden Ansprüche, **dadurch gekennzeichnet, dass** das Verfahren zur Verwendung in einem kontinuierlichen Entwässerungsverfahren für fest-flüssig Suspensionen vorgesehen ist.

12. Verfahren nach einem der vorangehenden Ansprüche, **dadurch gekennzeichnet, dass** das Verfahren in einem Entwässerungsverfahren von Klärschlamm eingesetzt wird.

13. Verfahren nach Anspruch 12, **dadurch gekennzeichnet, dass** das Verfahren bei der Filtration, Sedimentation, Flotation, Eindickung oder Entwässerung von Klärschlamm eingesetzt wird.

14. System zur Ausführung eines Verfahrens zur Flockung von in einer Suspension enthaltenen Feststoffpartikeln (2) nach einem der Ansprüche 1 bis 13, umfassend eine Rechen- und Steuereinheit (9), eine Messzelle (13), und eine Dosiereinheit (10), wobei die Rechen- und Steuereinheit (9) signaltechnisch mit der Messzelle (13) und der Dosiereinheit (10) verbunden ist, mit den folgenden Merkmalen:

- die Messzelle (13) ist dazu eingerichtet, die in der Suspension vorliegende Suspensions-Ladungsdichte ($dEq_M$) zu einer Vielzahl von Messzeitpunkten (N) im Wege einer als Ladungstitration durchgeführten titrimetrischen Analyse unter Messung des Strömungspotentials mit einem Streaming Current Detector zu ermitteln und die so erhaltenen Daten an die Rechen- und Steuereinheit (9) weiterzuleiten, wobei die Ermittlung der Suspensions-Ladungsdichte ($dEq_M$) unter der Annahme erfolgt, dass sich lediglich überschüssiges freies Flockungsmittel, also jene Flockungsmittelmoleküle oder Flockungsmittelpartikel, deren Oberflächenladung nicht durch Gegenionen kompensiert sind, an einer Wandung der Messzelle anlagert, wobei bei dieser Annahme ein entlang der Wandung ausgebildetes und messbares elektrisches Potential in unmittelbarem Zusammenhang mit dem Überschuss an freiem Flockungsmittel steht, wobei der Überschuss an freiem Flockungsmittel mit einem Titranten durch Bildung von stabilen Ionenpaaren titriert wird, wobei sich das in den Ionenpaaren gebundene Flockungsmittel nicht mehr an die Wandung anlagert, wobei das messbare elektrische Potential im Laufe der Titration sinkt bis das Flockungsmittel nicht mehr zu diesem beiträgt und vollständig durch den Titranten kompensiert ist;
- die Rechen- und Steuereinheit (9) ist dazu eingerichtet,

a. eine zu den jeweiligen Messzeitpunkten (N) zur Gewährleistung einer optimalen Flockung benötigte Zugabemenge ($D_{p,N}$, $D'_{p,N}$) des Flockungsmittels zu berechnen, basierend auf einer mengenproportionalen Regelung oder einer frachtproportionalen Regelung, wobei die zu einem Messzeitpunkt (N) bei einer mengenproportionalen Regelung benötigte Zugabemenge $D_{p,N}$ berechnet wird nach

$$D_{p,N} = D_{p,A} + (dEq_Z - dEq_M)/dEq_P,$$

mit $D_{p,A}$ als Zugabemenge zu einem dem Messzeitpunkt (N) unmittelbar vorangehenden Zeitpunkt, wobei die zu einem Messzeitpunkt (N) bei einer frachtproportionalen Regelung benötigte Zugabemenge $D'_{p,N}$ berechnet wird nach

$$D'_{p,N} = D'_{p,A} + ((dEq_Z - dEq_M)/dEq_P)/fTS_s,$$

mit $D'_{p,A}$ als Zugabemenge zu einem dem Messzeitpunkt (N) unmittelbar vorangehenden Zeitpunkt und $fTS_s$ als Feststoffgehalt der Suspension, und

b. ein auf der benötigten Zugabemenge ($D_{p,N}$, $D'_{p,N}$) des Flockungsmittels basierendes Dosiersignal an die Dosiereinheit weiterzuleiten;

- die Dosiereinheit (10) ist dazu eingerichtet, der Suspension in Folge des Dosiersignals die benötigte Zugabemenge ($D_{p,N}$, $D'_{p,N}$) des Flockungsmittels zuzugeben.

## Claims

1. Method for flocculating solid particles (2) contained in a suspension, comprising the following steps:

a. providing a suspension and specifying a target charge density ($dEq_Z$) for the suspension, with the proviso that the target charge density ($dEq_Z$) is that charge density of the suspension at which the solid particles (2) flocculate;
b. providing a flocculating agent, wherein the flocculating agent has a flocculating agent charge density ($dEq_p$);
c. at a plurality of measurement time points (N): determining a suspension charge density ($dEq_M$) present in the suspension by way of a titrimetric analysis conducted as charge titration with measurement of the streaming potential using a measuring cell in the form of a Streaming Current Detector, wherein this is carried out on the assumption that only excess free flocculating agent, i.e. those flocculating agent molecules or flocculating agent particles whose surface charge is not compensated by gegenions, is deposited on a wall of the measuring cell, wherein on this assumption an electrical potential that is created and measurable along the wall is in a direct relationship with the excess of free flocculating agent, wherein the excess of free flocculating agent is titrated with a titrant by the formation of stable ion pairs, wherein the flocculating agent bound in the ion pairs no longer accumulates on the wall, wherein the measurable electrical potential decreases in the course of the titration until the flocculating agent no longer contributes thereto and is entirely compensated by the titrant;
d. determining a quantity ($D_{p,N}$, $D'_{p,N}$) of the flocculating agent that is required to be added at the respective measurement time points (N) in order to guarantee optimal flocculation, which is based on quantitatively proportional regulation or a load-proportional regulation, wherein the quantity $D_{p,N}$ that is required to be added at the respective measurement time point (N) in a quantitatively proportional regulation is calculated according to

$$D_{p,N} = D_{p,A} + (dEq_Z - dEq_M)/dEq_P,$$

where $D_{p,A}$ is a quantity to be added at a measurement time point immediately preceding the measurement time point (N),

wherein the quantity $D'_{p,N}$ that is required to be added at a measurement time point (N) in a load-proportional regulation is calculated according to

$$D'_{p,N} = D'_{p,A} + ((dEq_z - dEq_M)/dEq_p)fTS_s,$$

where $D'_{p,A}$ is a quantity to be added at a measurement time point immediately preceding the measurement time point (N), and $fTS_s$ is the solid content in the suspension;

e. following the respective measurement time points (N): adding the determined quantity ($D_{p,N} = D'_{p,N}$) of flocculating agent that is to be added to the suspension.

2. Method according to Claim 1, **characterized in that** the target charge density ($dEq_z$) is established or determined by way of a separate laboratory examination, for example by a titration.

3. Method according to Claim 2, **characterized in that** the target charge density ($dEq_z$) is determined for a certain suspension once or at regular intervals.

4. Method according to Claim 1, **characterized in that** the flocculating agent charge density ($dEq_p$) is fixed, derived from empirical data, or determined by way of a separate investigation, for example by way of a titration which is carried out automatically in the measuring device or in the laboratory.

5. Method according to Claim 3, **characterized in that** the flocculating agent charge density ($dEq_p$) is checked at defined time intervals.

6. Method according to any one of the preceding claims, **characterized in that** a charged polymer, for example a polyelectrolyte, is used as flocculating agent.

7. Method according to Claim 6, **characterized in that** an anionic or a cationic polymer is used as flocculating agent.

8. Method according to Claim 1, **characterized in that** the suspension charge density ($dEq_M$) is determined at regular or irregular time intervals, wherein the time intervals can be specified manually or determined automatically.

9. Method according to any one of the preceding claims, **characterized in that** a defined sample volume of the suspension is automatically supplied to the measuring cell.

10. Method according to Claim 1, **characterized in that** at least the steps c. and d. of the method are carried out automatically using a processing and control unit (9).

11. Method according to any one of the preceding claims, **characterized in that** the method is provided for use in a continuous dewatering process for solid-liquid suspensions.

12. Method according to any one of the preceding claims, **characterized in that** the method is used in a process for dewatering sewage sludge.

13. Method according to Claim 12, **characterized in that** the method is used in the filtration, sedimentation, flotation, thickening or dewatering of sewage sludge.

14. System for carrying out a method for flocculating solid particles (2) contained in a suspension according to any one of Claims 1 to 13, comprising a processing and control unit (9), a measuring cell (13) and a dosing unit (10), wherein the processing and control unit (9) is connected to the measuring cell (13) and the dosing unit (10) for the purpose of signal exchange, having the following features:

- the measuring cell (13) is configured to determine the suspension charge density ($dEq_M$) present in the suspension at a plurality of measurement time points (N) by way of a titrimetric analysis conducted as charge titration with measurement of the streaming potential using a Streaming Current Detector, and to forward the data obtained thereby to the processing and control unit (9), wherein the determination of the suspension charge density ($dEq_M$) is carried out on the assumption that only excess free flocculating agent, i.e. those flocculating agent molecules or flocculating agent particles whose surface charge is not compensated by gegenions, is deposited on a wall of the measuring cell, wherein on this assumption an electrical potential that is created and measurable along the wall is in a direct relationship with the excess of free flocculating agent, wherein the excess of free flocculating agent is titrated with a titrant by the formation of stable ion pairs, wherein the flocculating agent bound in the ion pairs no longer accumulates on the wall, wherein the measurable electrical potential decreases in the course of the titration until the flocculating agent no longer contributes thereto and is entirely compensated by the titrant;

- the processing and control unit (9) is configured to:

a. calculate a quantity ($D_{p,N}$, $D'_{p,N}$) of the flocculating agent that is required to be added at the respective measurement time points (N) in order to guarantee optimal flocculation, based on quantitatively proportional regulation or a load-proportional regulation, wherein the quantity $D_{p,N}$ that is required to be added at a respective measurement time point (N) in a quantitatively proportional regulation is calculated according to

$$D_{p,N} = D_{p,A} + (dEq_z - dEq_M)/dEq_p,$$

where $D_{p,A}$ is a quantity to be added at a measurement time point immediately preceding the measurement time point (N),

wherein the quantity $D'_{p,N}$ that is required to be added at a measurement time point (N) in a load-proportional regulation is calculated according to

$$D'_{p,N} = D'_{p,A} + ((dEq_z - dEq_M)/dEq_p)fTS_s,$$

where $D'_{p,A}$ is a quantity to be added at a measurement time point immediately preceding the measurement time point (N), and $fTS_s$ is the solid content in the suspension, and

b. transmit a dosing signal based on the required quantity ($D_{p,N}$ = $D'_{p,N}$) of the flocculating agent to be added to the dosing unit;

- the dosing unit (10) is configured to add the quantity ($D_{p,N}$ = $D'_{p,N}$) of the flocculating agent that is required to be added to the suspension on the basis of the dosing signal.

## Revendications

1. Procédé, destiné à floculer des particules solides (2) contenues dans une suspension, comprenant les étapes suivantes, consistant à :

a. mettre à disposition une suspension et donner une densité de charge cible ($dEq_z$) de la suspension, avec le critère que la densité de charge cible ($d_{Eqz}$) soit la densité de charge de la suspension à laquelle les particules solides (2) floculent ;

b. mettre à disposition un floculant, le floculant faisant preuve d'un densité de charge ($dEq_p$) de floculant ;

c. à une pluralité de moments de mesure (N) : déterminer une densité de charge ($dEq_M$) de la suspension présente dans la suspension au cours d'une analyse titrimétrique réalisée sous la forme d'une titration de la charge, par mesure du potentiel d'écoulement avec une cellule de mesure, présentant la forme d'un détecteur de courant de flux, ceci étant réalisé en supposant que seul l'excédent de floculant libre, c'est-à-dire les molécules de floculant ou les particules de floculant dont la charge superficielle n'est pas compensée par des contre-ions s'accumule sur une paroi de la cellule de mesure, lorsque cette supposition est satisfaite, un potentiel électrique produit le long de la paroi et mesurable se trouvant en relation directe avec l'excédent de floculant libre, l'excédent de floculant libre étant titré avec un titrant, par création de paires d'ions stables, le floculant lié dans les paires d'ions ne s'accumulant plus sur les parois, le potentiel électrique mesurable chutant au fur et à mesure de la titration, jusqu'à ce que le floculant n'y contribue plus et soit totalement compensé par le titrant ;

d. déterminer une quantité d'addition ($D_{p,N}$, $D'_{p,N}$) du floculant, nécessaire aux moments de mesure (N) concernés pour assurer une floculation optimale, qui est basée sur une régulation proportionnelle à la quantité ou sur une régulation proportionnelle au fret, la quantité d'addition $D_{p,N}$ nécessaire à un moment de mesure (N) lors d'une régulation proportionnelle à la quantité étant calculée selon

$$D_{p,N} = D_{p,A} + (dEq_Z - dEq_M)/dEq_p,$$

avec $D_{p,A}$ en tant que quantité d'addition à un moment précédant directement le moment de mesure (N), la quantité d'addition $D'_{p,N}$ nécessaire à un moment de mesure (N) lors d'une régulation proportionnelle au fret étant calculée selon

$$D'_{p,N} = D'_{p,A} + ((dEq_Z - dEq_M)/ dEq_p)/fTS_s,$$

avec $D'_{p,A}$ en tant que quantité d'addition à un moment précédant directement le moment de mesure (N) et $fTS_s$ en tant que teneur en solide dans la suspension ;

e. à la suite des moments de mesure (N) concernés : ajouter la quantité d'addition ($D_{p,N}$, $D'_{p,N}$) déterminée du floculant dans la suspension.

2. Procédé selon la revendication 1, **caractérisé en ce que** l'on fixe la densité de charge cible ($dEq_Z$) ou on la détermine au cours d'un examen de laboratoire séparé, par exemple au cours d'une titration.

3. Procédé selon la revendication 2, **caractérisé en ce que** l'on détermine une seule fois ou régulièrement la densité de charge cible ($dEq_Z$) pour une certaine suspension.

4. Procédé selon la revendication 1, **caractérisé en ce que** l'on fixe la densité de charge ($dEq_p$) de floculant, on la déduit de données empiriques ou on la détermine au cours d'un examen séparé, par exemple au cours d'une titration, qui est réalisée automatiquement dans le dispositif de mesure ou en laboratoire.

5. Procédé selon la revendication 3, **caractérisé en ce que** l'on vérifie la densité de charge ($dEq_p$) de floculant dans des intervalles temporels définis.

6. Procédé selon l'une quelconque des revendications précédentes, **caractérisé en ce que** l'on utilise en tant que floculant un polymère chargé, par exemple un polyélectrolyte.

7. Procédé selon la revendication 6, **caractérisé en ce que** l'on utilise en tant que floculant un polymère anionique ou cationique.

8. Procédé selon la revendication 1, **caractérisé en ce que** l'on détermine à intervalles temporels réguliers ou irréguliers la densité de charge ($dEq_M$) de la suspension, les intervalles temporels pouvant être prédéfinis manuellement ou déterminés automatiquement.

9. Procédé selon l'une quelconque des revendications précédentes, **caractérisé en ce que** l'on alimente de manière automatisée vers la cellule de mesure un volume échantillon défini de la suspension.

10. Procédé selon la revendication 1, **caractérisé en ce que** l'on réalise de manière automatisée au moins les étapes de procédé c. et d. en utilisant une unité de calcul et de commande (9).

11. Procédé selon l'une quelconque des revendications précédentes, **caractérisé en ce que** le procédé est prévu pour être utilisé lors d'un procédé de dessication continu pour des suspensions solides / liquides.

12. Procédé selon l'une quelconque des revendications précédentes, **caractérisé en ce que** l'on met en œuvre le procédé lors d'un procédé de dessication de boues de curage.

13. Procédé selon la revendication 12, **caractérisé en ce que** l'on met en œuvre le procédé lors de la filtration, de la sédimentation, de la flottation, de l'épaississement et de la dessication de boues de curage.

14. Système, affecté à la réalisation d'un procédé destiné à floculer des particules solides (2) contenues dans une suspension selon l'une quelconque des revendications 1 à 13, comprenant une unité de calcul et de commande (9), une cellule de mesure (13) et une unité de dosage (10), l'unité de calcul et de commande (9) étant connectée par technique de signalisation avec la cellule de mesure (13) et avec l'unité de dosage (10), présentant les caractéristiques suivantes :

- la cellule de mesure (13) est configurée pour déterminer la densité de charge ($dEq_M$) de la suspension présente dans la suspension à une pluralité de moments de mesure (N) au cours d'une analyse titrimétrique réalisée sous la forme d'une titration de la charge, en mesurant le potentiel d'écoulement à l'aide d'un détecteur de courant de flux et pour retransférer les données ainsi obtenues à l'unité de calcul et de commande (9), la détermination de la densité de charge ($dEq_M$) de la suspension s'effectuant avec la supposition que seul l'excédent de floculant libre, c'est-à-dire les molécules de floculant ou les particules de floculant dont la charge superficielle n'est pas compensée par des contre-ions s'accumule sur une paroi de la cellule de mesure, lorsque cette supposition est satisfaite, un potentiel électrique produit le long de la paroi et mesurable se trouvant en relation directe avec l'excédent de floculant libre, l'excédent de floculant libre étant titré avec un titrant, par création de paires d'ions stables, le floculant lié dans les paires d'ions ne s'accumulant plus sur les parois, le potentiel électrique mesurable chutant au fur et à mesure de la titration, jusqu'à ce que le floculant n'y contribue plus et soit totalement compensé par le titrant ;
- l'unité de calcul et de commande (9) est configurée pour

a. calculer la quantité d'addition ($D_{p,N}$, $D'_{p,N}$) du floculant nécessaire aux moments de mesure (N) concernés pour assurer une floculation optimale, sur la base d'une régulation proportionnelle à la quantité ou d'une régulation proportionnelle au fret, la quantité d'addition $D_{p,N}$ nécessaire à un moment de mesure (N) lors d'une régulation proportionnelle à la quantité étant calculée selon

$$D_{p,N} = D_{p,A} + (dEq_z - dEq_M)/dEq_p,$$

avec $D_{p,A}$ en tant que quantité d'addition à un moment précédant directement le moment de mesure (N), la quantité d'addition $D'_{p,N}$ nécessaire à un moment de mesure (N) lors d'une régulation proportionnelle au fret étant calculée selon

$$D'_{p,N} = D'_{p,A} + ((dEq_z - dEq_M)/ dEq_p)/fTS_s,$$

avec $D'_{p,A}$ en tant que quantité d'addition à un moment précédant directement le moment de mesure (N) et $fTS_s$ en tant que teneur en solide dans la suspension ;

b. retransférer à l'unité de dosage un signal de dosage basé sur la quantité d'addition ($D_{p,N}$, $D'_{p,N}$) nécessaire du floculant ;

- l'unité de dosage (10) est configurée pour ajouter à la suspension en conséquence du signal de dosage la quantité d'addition ($D_{p,N}$, $D'_{p,N}$) nécessaire du floculant.

Q Beschickung

Abscheidung
flüssige Phase/Zentrat

Fig. 1

Q Beschickung

Festoffkonzentration

Abscheidung
flüssige Phase/Zentrat

Fig. 2

Fig. 3

**EP 3 959 176 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1642799 A1
- US 3594313 A
- US 6387274 B1
- WO 2018132306 A1
- JP 2018149495 A